# EUROPEAN PATENT APPLICATION

(11) **EP 2 105 287 A2**
(43) Date of publication of application: **30.09.2009**
(21) Application number: 08405177.0
(22) Date of filing: 14.07.2008
(51) Int. Cl.: B29C 70/54, B29C 70/30, B29C 35/02

(54) **Method for continuously proforming composite material in uncured state**

(30) Priority: 27.03.2008 JP 2008083203
(71) Applicant: JAMCO CORPORATION, Mitaka, Tokyo (JP)
(72) Inventor: Masatoshi Aijima c/o Jamco Corporation, Tokyo (JP)
(74) Representative: Moinas, Michel

(57) **Abstract**

The invention provides a method for continuously preforming a prepreg material impregnated with thermosetting resin in an uncured state. A sheet of prepreg material is drawn out from a roller, laminated, and bent into a given cross-sectional shape via a bending device. The prepreg material is then continuously formed via a mold having a heater into a long product. The heat and pressure applied to the prepreg material in the mold is selected from a heating temperature that does not completely cure the thermosetting resin and a pressure range enabling the prepreg material to maintain the formed state. The above-mentioned preforming method enables to form members having a loose curvature (for example, a radius of 7 m or smaller) or stringers having a continuously varied curvature.

## Description

### Field of the invention

The present invention relates to a method for continuously preforming a composite prepreg material having carbon fiber or the like impregnated with thermosetting resin in an uncured state.

### Description of the related art

The art related to continuously forming a prepreg material is disclosed for example in Japanese Patent Application Laid-Open Publication No. 2001-191418 (patent document 1). Further, arts related to utilizing a fiber-reinforced composite material in a partially cured state are disclosed in Japanese Patent Application Laid-Open Publication Nos. 2001-293790, 2001-310798, 2001-315149 and 2000-15710 (patent documents 2 through 5).

Patent documents 2 through 5 disclose utilizing a partially-cured composite material, but they lack to disclose a method for continuously forming such material in an efficient manner.

### SUMMARY OF THE INVENTION

The present invention aims at providing a method for manufacturing a composite material continuously in an uncured state by analyzing the relationship between the heating temperature of prepreg material and the curing progression thereof through various experiments.

The method for continuously preforming a prepreg composite material into a long linear member in an uncured state according to the present invention comprises a step of sending out a prepreg material wound in a roll; a step of laminating the prepreg material sent out from the roll and bending the same into a given cross-sectional shape; a step of preforming the bent prepreg material in a mold having a heater; and a step of pulling out the preformed prepreg material from the mold; wherein the step of preforming the prepreg material in the mold is performed under such a processing condition of temperature and pressure that thermosetting resin impregnated in the prepreg material is not cured completely but the prepreg material maintains the formed shape, and in a post process, the preformed composite material is deformed into a three-dimensional shape corresponding to a counterpart member and completely cured so as to constitute a reinforcement member of the counterpart member.

Further, the prepreg material is sent into the mold intermittently.

The present invention enables to continuously preform a prepreg composite material in an uncured state, so that by further deforming the preformed composite material into a three-dimensional shape corresponding to a counterpart member and completely curing the same in a post process, the composite material can be utilized as a reinforcement member or the like.

The present preforming method facilitates forming of members having a loose curvature, such as with a radius of 7 m or smaller, or members such as stringers having continuously varied curvatures.

### BRIEF DESCRIPTION OF THE DRAWINGS

FIG. 1 is an explanatory view illustrating an example in which the present invention is applied;
FIG. 2 is an explanatory view illustrating an example of an uncured stringer;
FIG. 3 is an explanatory view illustrating an example of a completely cured stringer;
FIG. 4 is an explanatory view illustrating a stringer material having a hat-shaped cross-section;
FIG. 5 is an explanatory view illustrating a stringer having a hat-shaped cross-section being completely cured in advance;
FIG. 6 is an explanatory view illustrating an example of an uncured continuous forming apparatus of prepreg composite material;
FIG. 7 is an explanatory view illustrating a cross-sectional structure of a prepreg material;
FIG. 8 is an explanatory view illustrating the bent state of prepreg material;
FIG. 9 is an explanatory view illustrating the structure of a mold of a press device;
FIG. 10 is a timing chart of the continuous forming device;
FIG. 11 is an explanatory view illustrating the gelation of prepreg material;
FIG. 12 is an explanatory view of the formed product in an uncured state; and
FIG. 13 is an explanatory view illustrating the process of manufacturing a completely cured product.

### DETAILED DESCRIPTION OF THE PREFERRED EMBODIMENTS

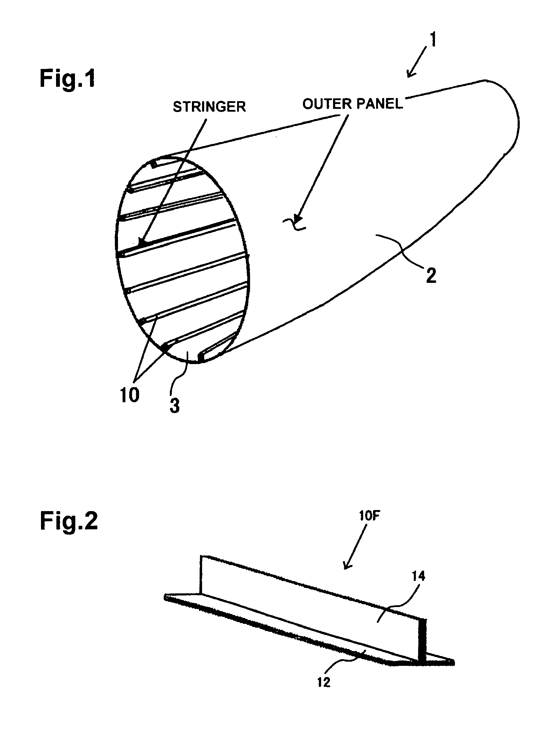

FIG. 1 is an explanatory view illustrating an example for applying the present invention.

A fuselage 1 of an aircraft has necessary strength obtained by attaching stringers 10 which are reinforcement members to an inner surface 3 of an outer panel 2. Since the inner surface 3 of the outer panel 2 is formed as a three-dimensional curved surface, the stringer 10 must also be formed to have a shape corresponding to this curved surface.

FIG. 2 illustrates a stringer formed of an uncured composite material 10F having a T-shaped cross-section including a skin 12 and a rib 14. The uncured composite material 10F manufactured by a continuous forming apparatus described later is cut into a predetermined length, which is then heated appropriately and pressed against the inner surface 3 of the outer panel 2, by which the uncured material 10F is deformed in correspondence to the curved surface of the inner surface 3. In this state, a heating and pressing apparatus such as an autoclave is used to apply heat and pressure to the uncured material 10F to completely cure the same.

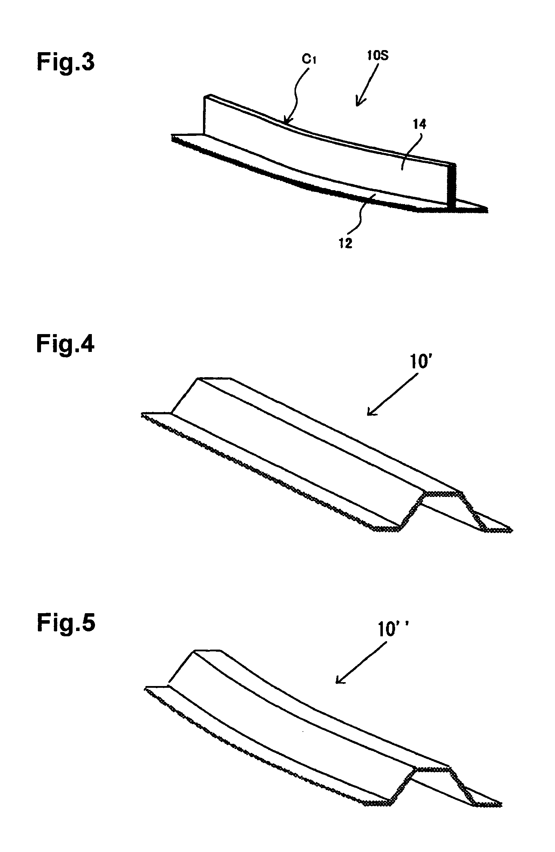

FIG. 3 illustrates a stringer having been completely cured in advance.

An uncured material having been manufactured in a continuous forming apparatus is cut into a predetermined length, placed on a mold shaped to correspond to the shape of the inner surface of the fuselage 2, subjected to pressure via a vacuum bag or a mold and heated moderately for adhesion, and then heated and pressed to form a completely cured material 10S.

The completely cured material 10S has a T-shaped cross-section including a skin 12 and a rib 14, with a curvature C₁ corresponding to the curvature of the inner surface 3 of the fuselage to which the material is to be attached. The completely cured material 10S is attached via an appropriate attaching means to the inner surface 3 to form the fuselage.

The aforementioned methods described with reference to FIG. 2 and FIG. 3 can be applied to facilitate forming of stringers attached to the fuselage of aircrafts having, for example, a continuously varying curvature with a minimum curvature radius of approximately 7 m.

FIG. 4 illustrates a stringer material having a hat-shaped cross-section. It is also possible to manufacture an uncured material 10' having such a shape.

FIG. 5 illustrates a stringer having a hat-shaped cross-section having been completely cured in advance. It is also possible to manufacture a stringer 10" having such a shape.

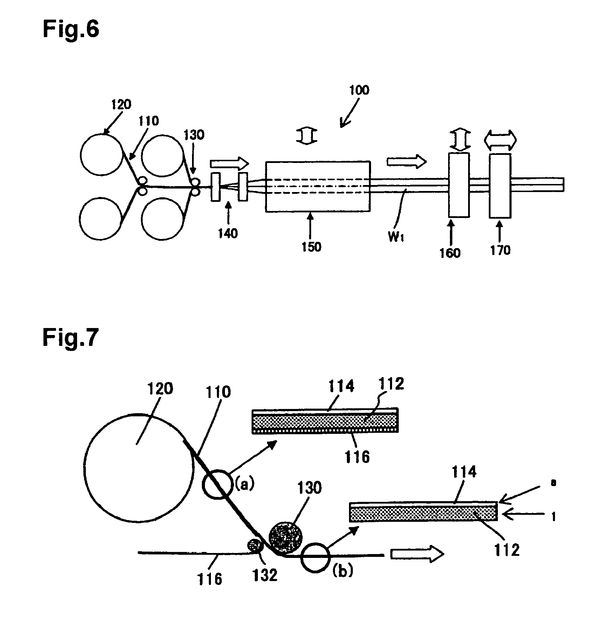

FIG. 6 shows an example of an apparatus for continuously forming an uncured prepreg composite material in an intermittent manner.

The continuous forming apparatus 100 includes a roll 120 for supplying a prepreg material 110, a guide roller 130 and a bending device 140.

FIG. 7 illustrates a cross-sectional structure of the prepreg material 110 being supplied, wherein a prepreg sheet 112 is sandwiched between a carrier film 114 and a separator film 116 and supplied from a roll 120. The separator film 116 is removed while passing between rollers 130 and 132, and the laminated body composed of the prepreg sheet 112 and the carrier film 114 is then sent to the bending device 140.

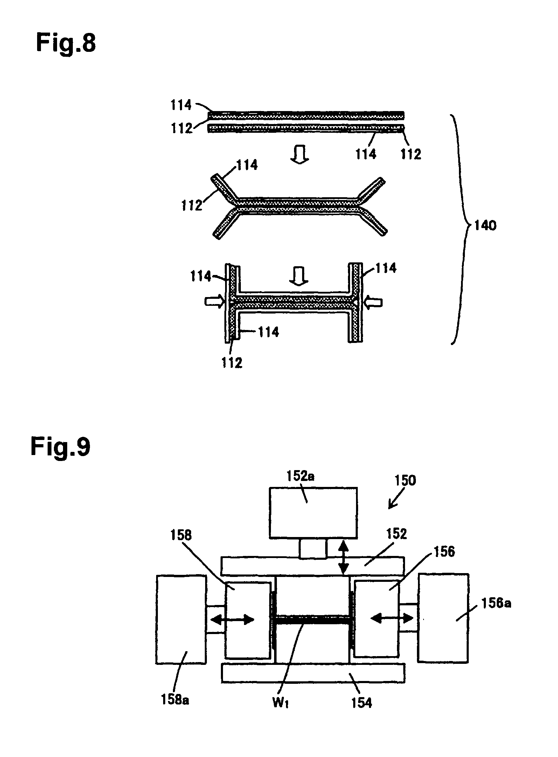

FIG. 8 illustrates how the laminated prepreg material is bent into an H-shape while passing through the bending device 140.

As shown in FIG. 6, a press device 150 is arranged on the downstream side of the bending device 140. On the downstream side of the press device 150 are placed a fixed clamp device 160 and a puller clamp device 170.

FIG. 9 is an explanatory view illustrating the structure of a mold of the press device 150.

An upper mold 152 is positioned to face a fixed lower mold 154, and the upper mold 152 is driven up and down via an actuator 152a.

The left and right molds 156 and 158 are also driven laterally via actuators 156a and 158a, by which the prepreg laminated body W₁ is pressed into an H-shape.

Each mold has a heater built therein, by which the mold is heated to predetermined temperature.

The fixed clamp device 160 and the puller device 170 at corresponding timings to pull out the strip-shaped prepreg laminated body W₁ intermittently from the press device 150.

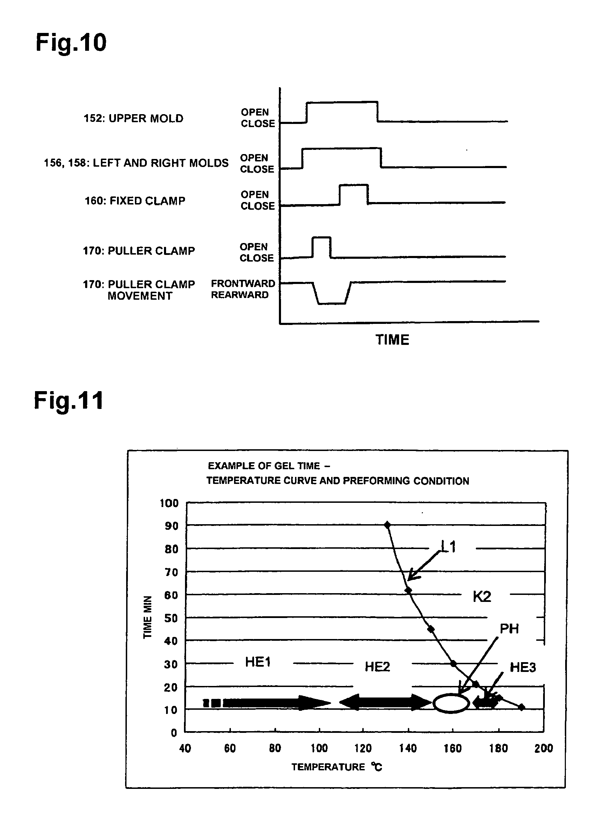

FIG. 10 is a timing chart of the operation of the continuous forming device 100.

In the chart, the horizontal axis represents time, and the vertical axis represents the opening and closing or movement of the mold and clamp. By this operation, the uncured molded product W₁ is formed into a long product having a given cross-sectional shape in an intermittent and continuous manner. A molding speed of five to ten meters per hour, for example, is achieved by this operation.

FIG. 11 is a chart illustrating the relationship between time and temperature required for the prepreg material to gelate.

The horizontal axis represents temperature, the vertical axis represents heating time, and line L₁ represents the temperature - gelating property of a prepreg material that is cured at 180 °C. Gelation starts and thermal hardening progresses at area K₂ on the right side of the line.

In other words, the progress of thermal hardening is determined by the relationship between the heating temperature and heating time.

For example, if the prepreg material passes the heating mold with a heating time of ten to fifteen minutes, that is, if the prepreg material is formed within temperature range HE1 on a line between ten to fifteen minutes of heating time of the vertical axis of FIG. 11, the viscosity of resin impregnated in the prepreg material will not be reduced, so that voids existing in the interior of the adhered prepreg materials will remain, and the prepreg material will not maintain its molded shape since it is still soft and hardened only slightly.

Similarly, if the prepreg material is formed within a somewhat higher temperature range HE2, the resin viscosity during heating is reduced, so that the adhesion beween prepreg materials will be improved compared to the case of temperature range HE1, with hardening somewhat progressed, and the formed shape somewhat maintained through not completely. However, it has been confirmed through experiments that according to this temperature range HE2, the voids existing in the interior of the prepreg materials will not be eliminated.

Further, according to temperature range PH close to the gelation line L1, the prepreg materials are adhered closely together and voids are reduced significantly, and a cure degree of 30 % to 50 % is realized. In this state, the prepreg material is considerably hardened, so that the formed shape is maintained, and a formed product with a shape close to the final shape is obtained, except that the material is semi-cured or uncured and has a linear shape.

Further, it had been confirmed via experiments that according to the temperature range HE3 where the heating temperature approximates the gelation curve, the voids within the prepreg material increase and the separation of prepreg materials occur, so that the uncured formed material is at an undesirable state.

As a result, the appropriate range of condition for continuous forming in an uncured state is, if the forming speed is set to five to ten meters per hour, the heating temperature range is a relatively narrow range close to 160 °C, for example, shown by PH of FIG. 11.

The present invention focuses on the above-described properties, and provides a method for continuously forming a prepreg material product in an uncured state.

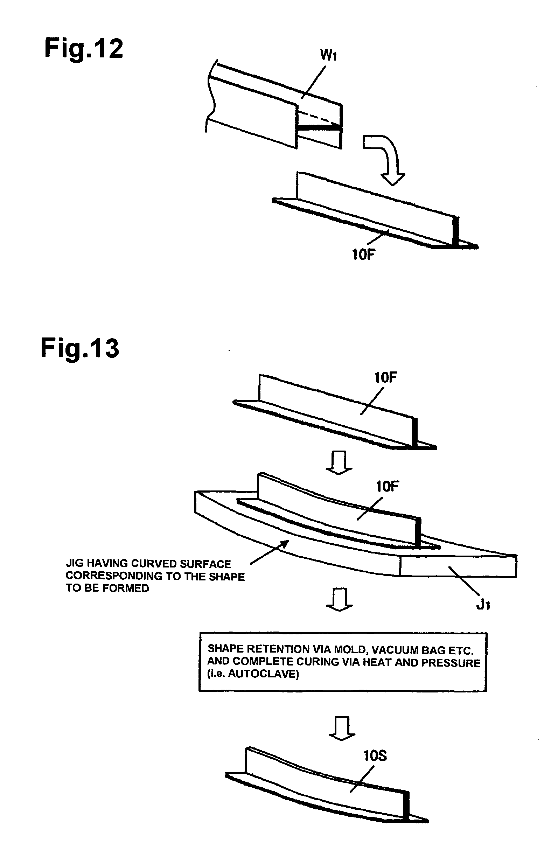

FIG. 12 illustrates an uncured formed product W₁ having been formed by the present apparatus. The product has an H-shaped cross-section, which can be cut in half to obtain a T-shaped uncured material 10F.

The uncured material 10F is then attached, for example, to the inner surface 3 of the outer panel 2 of the fuselage 1 of the aircraft illustrated in FIG. 1 by applying a certain degree of heat and pressure, and thereafter, the material is subjected to given heat and pressure for complete curing so that it exerts the functions of a stringer.

FIG. 13 illustrates the process of placing the uncured material 10F on a jig J₁, deforming the uncured material 10F to have a shape corresponding to the jig J₁ with a curved surface, placing the jig J₁ and the uncured material 10F in a vacuum pack or the like, applying a certain degree of heat and pressure to attach the same, and then placing the same in an autoclave or the like for heating to manufacture a completely cured material 10S.

## Claims

1. A method for continuously preforming a prepreg composite material into a long linear member in an uncured state, the method comprising:
a step of sending out a prepreg material wound in a roll;
a step of laminating the prepreg material sent out from the roll and bending the same into a given cross-sectional shape;
a step of preforming the bent prepreg material in a mold having a heater; and
a step of pulling out the preformed prepreg material from the mold; wherein
the step of preforming the prepreg material in the mold is performed under such a processing condition of temperature and pressure that thermosetting resin impregnated in the prepreg material is not cured completely but the prepreg material maintains the formed shape, and in a post process, the preformed composite material is deformed into a three-dimensional shape corresponding to a counterpart member and completely cured so as to constitute a reinforcement member of the counterpart member.

2. The method for continuously preforming a composite material in an uncured state according to claim 1, wherein the prepreg material is sent into the mold intermittently.
